# EUROPÄISCHE PATENTSCHRIFT

(11) **EP 3 649 343 B1**
(45) Veröffentlichungstag und Bekanntmachung des Hinweises auf die Patenterteilung: **22.03.2023**
(21) Anmeldenummer: 18735307.3
(22) Anmeldetag: 29.06.2018
(51) Int. Cl.: F03D 7/04, F03D 13/10, F03D 80/50

(54) **MOBILE STEUEREINHEIT FÜR EINE WINDENERGIEANLAGE**
MOBILE CONTROL UNIT FOR A WIND TURBINE
UNITÉ DE COMMANDE MOBILE POUR UNE ÉOLIENNE

(30) Priorität: 04.07.2017 DE 102017114915
(43) Veröffentlichungstag der Anmeldung: 13.05.2020
(73) Patentinhaber: Wobben Properties GmbH, 26607 Aurich (DE)
(72) Erfinder: JANSSEN, Steffen, 26607 Aurich (DE); REITER, Daniel, 26632 Ihlow (DE)
(74) Vertreter: Eisenführ Speiser
(86) Internationale Anmeldenummer: PCT/EP2018/067671
(87) Internationale Veröffentlichungsnummer: WO 2019/007855

(56) Entgegenhaltungen:
- EP-A1- 2 009 279
- EP-A1- 2 538 075
- US-A1- 2016 333 853

## Beschreibung

Die vorliegende Erfindung betrifft eine mobile Steuereinheit für eine Windenergieanlage, eine Verwendung einer mobilen Steuereinheit sowie ein Verfahren zum Steuern einer Windenergieanlage.

Bei der Montage einer Windenergieanlage wird die Windenergieanlage an das Versorgungsnetz angeschlossen, so dass die Windenergieanlage Energie aus dem Versorgungsnetz beziehen kann, um beispielsweise ein Verstellen der Pitchwinkel der Rotorblätter oder des Azimuthwinkels vorzunehmen. Solange die Windenergieanlage jedoch noch nicht an das Energieversorgungsnetz angeschlossen ist, kann die Windenergieanlage nicht entsprechend gesteuert werden, weil die entsprechende Energieversorgung fehlt. Um die Windenergieanlage dennoch zu steuern, kann ein mobiles Versorgungsmodul bei der Montage der Windenergieanlage eingesetzt werden.

In der prioritätsbegründenden deutschen Patentanmeldung hat das Deutsche Patent- und Markenamt die folgenden Dokumente recherchiert: US 9 353 730 B2, US 8 882 441 B2, US 2011 1 0 260 533 A1, US 2015/0 115 609 A1 und WO 20151 188 830 A1.

Ein weiteres Dokument aus dem Stand der Technik ist US 2016 / 333 853 A1.

Es ist eine Aufgabe der vorliegenden Erfindung, eine mobile Steuereinheit für eine Windenergieanlage vorzusehen, welche einfach zu bedienen ist und vielseitig einsetzbar ist.

Diese Aufgabe wird durch eine Verwendung einer mobilen Steuereinheit nach Anspruch 1, durch ein Verfahren zum Steuern einer Windenergieanlage nach Anspruch 6 sowie durch eine mobile Steuereinheit für eine Windenergieanlage nach Anspruch 6 gelöst.

Somit wird eine Verwendung einer mobilen Steuereinheit für eine Windenergieanlage, während die Windenergieanlage nicht an ein Energieversorgungsnetz angeschlossen ist oder während einer Wartung der Windenergieanlage, vorgesehen. Die mobile Steuereinheit weist ein Versorgungsmodul mit einer Hauptsteuereinheit sowie mindestens ein Steuermodul zum Steuern einer Komponente der Windenergieanlage auf. Das mindestens eine Steuermodul ist mit dem Versorgungsmodul gekoppelt und wird von dem Versorgungsmodul mit Spannung sowie Steuerbefehlen versorgt.

Die mobile Steuereinheit kommt insbesondere dann zum Einsatz, wenn die Windenergieanlage sich nicht im Normalbetrieb befindet und Energie erzeugen kann und keine Energie aus dem Energieversorgungsnetzwerk beziehen kann (z. B. bei der Montage, Demontage oder bei einer Wartung).

Gemäß einem Aspekt der vorliegenden Erfindung weist die mobile Steuereinheit eine Bedieneinheit zum Steuern des mindestens einen Steuermoduls zum Steuern einer Komponente der Windenergieanlage auf. Damit kann ein Servicemitarbeiter die jeweiligen Komponenten der Windenergieanlage wie beispielsweise die Pitchmotoren, die Azimuthmotoren oder die Rotorbremse bedienen, auch wenn die Windenergieanlage nicht an ein Energieversorgungsnetz angeschlossen ist (bzw. wenn die Windenergieanlage nicht durch das Energieversorgungsnetz mit Energie versorgt wird oder wenn eine Wartung der Windenergieanlage durchgeführt wird).

Gemäß einem weiteren Aspekt der vorliegenden Erfindung ist zwischen dem Versorgungsmodul und dem mindestens einen Steuermodul eine Anschlussleitung vorgesehen, mittels welcher die Spannung für die Steuermodule sowie Steuerbefehle übertragen werden können.

Die Erfindung betrifft ebenfalls ein Verfahren zum Steuern einer Windenergieanlage, welche nicht an das Energieversorgungsnetz angeschlossen ist. Eine mobile Steuereinheit wird in einer Gondel der Windenergieanlage positioniert. Mindestens ein Steuermodul wird an das Versorgungsmodul sowie an eine zu steuernde Komponente der Windenergieanlage angeschlossen. Die Komponenten der Windenergieanlage werden mittels eines Bedienteils des Versorgungsmoduls gesteuert. Die mobile Steuereinheit wird demontiert, wenn die Windenergieanlage an das Energieversorgungsnetz angeschlossen ist oder wenn die Wartung beendet ist.

Gemäß einem Aspekt der vorliegenden Erfindung weist die mobile Steuereinheit für eine Windenergieanlage ein Versorgungsmodul, ein Bedienteil, einen Anschluss für eine Energieversorgung sowie mindestens ein Steuermodul zum Steuern einer Komponente der Windenergieanlage auf. Das Steuermodul kann beispielsweise ein Pitchmodul zum Steuern der Pitchwinkel der Rotorblätter, ein Azimuthmodul zum Steuern des Azimuthwinkels oder ein Bremsmodul darstellen. Das Versorgungsmodul wird insbesondere bei der Montage, Wartung und Demontage der Windenergieanlage verwendet, also dann, wenn die Windenergieanlage nicht an das Energieversorgungsnetz angeschlossen ist bzw. damit gekoppelt ist. Das Versorgungsmodul kann als Spannungsversorgung und Hauptsteuereinheit dienen.

Gemäß einem Aspekt der vorliegenden Erfindung kann das Versorgungsmodul einen Steuerschrank und einen Rahmen aufweisen, so dass das Versorgungsmodul beispielsweise mittels einer Lastenwinde in die Gondel der Windenergieanlage gehoben werden kann. Dort können dann die benötigten Module an das Versorgungsmodul angeschlossen werden, um den Pitchmotor, den Azimuthmotor und/oder die Rotorbremse zu steuern. Optional können Reifen oder Rollen an dem Rahmen des Versorgungsmoduls befestigt werden, um die Mobilität des Moduls zu verbessern.

An dem Versorgungsmodul kann eine Steckdose CEE-16 A vorgesehen sein. Ferner können Anschlüsse für die Anschlussleitungen der jeweiligen Module vorgesehen sein.

Gemäß einem Aspekt der vorliegenden Erfindung kann eine Funkfernbedienung vorgesehen sein, um das Versorgungsmodul steuern zu können. Hierzu kann das Versorgungsmodul einen Funkempfänger aufweisen. Mittels der Fernbedienung oder mittels der Notbedieneinheit kann eine Steuerung der Pitchwinkel der Rotorblätter, eine Steuerung des Azimuthwinkels undloder eine Steuerung der Rotorbremse durchgeführt werden.

Gemäß der Erfindung wird eine mobile Steuereinheit für eine Windenergieanlage vorgesehen, welche eine Mehrzahl von Komponenten aufweist. Die mobile Steuereinheit weist ein Versorgungsmodul mit einer Hauptsteuereinheit sowie einem ersten, einem zweiten und einem dritten mit dem Versorgungsmodul gekoppelten Steuermodul zum Steuern der Komponenten der Windenergieanlage auf. Die Hauptsteuereinheit dient zum Steuern der Komponenten der Windenergieanlage mittels der an das Versorgungsmodul angeschlossenen Steuermodule.

Nachdem die Windenergieanlage an das Energieversorgungsnetz angeschlossen worden ist, kann die mobile Steuereinheit mit dem Versorgungsmodul und den Steuermodulen entfernt werden.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer erfindungsgemäßen Windenergieanlage, und
- Fig. 2: zeigt eine schematische Darstellung einer mobilen Steuereinheit sowie Teilen einer Windenergieanlage.

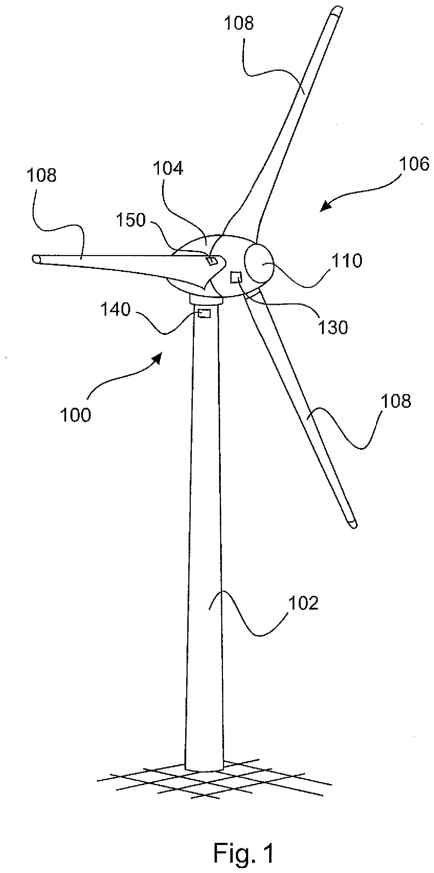

Fig. 1 zeigt eine schematische Darstellung einer erfindungsgemäßen Windenergieanlage. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren 150 an den Rotorblattwurzeln 108b der jeweiligen Rotorblätter 108 verändert werden.

Mittels Pitchmotoren 150 kann der Pitchwinkel der Rotorblätter 108 verstellt werden. Mittels Azimuthmotoren 140 kann der Azimuthwinkel des Rotors 106 bzw. der Gondel 104 der Windenergieanlage verstellt werden. Ferner kann die Windenergieanlage eine Rotorbremse 130 aufweisen, welche dazu dient, den Rotor zu arretieren.

Die Windenergieanlage gemäß der Erfindung weist typischerweise eine dezentrale Steuerung auf, d. h. die jeweiligen Komponenten der Windenergieanlage wie die Pitchmotoren zum Verstellen der Rotorblätter, die Azimuthmotoren zum Verstellen des Azimuthwinkels und dergleichen werden dezentral durch die jeweiligen Steuermodule gesteuert. Alternativ dazu ist auch eine zentrale Steuerung möglich.

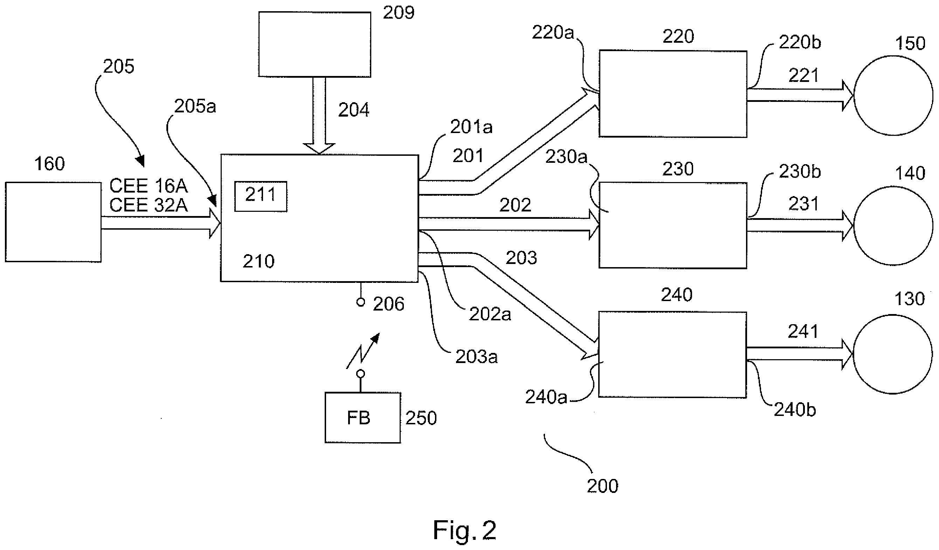

Fig. 2 zeigt eine schematische Darstellung einer mobilen Steuereinheit sowie Teilen einer Windenergieanlage. Die mobile Steuereinheit 200 weist ein Versorgungsmodul 210 sowie mindestens ein weiteres Steuermodul wie beispielsweise ein Pitchmodul 220, ein Azimuthmodul 230 undloder ein Rotorbremsmodul 240 auf. Ferner kann die mobile Steuereinheit eine Bedieneinheit 209 und optional eine Fernbedienung 250 aufweisen. Das Versorgungsmodul 210 weist Anschlüsse 201a - 203a für Anschlussleitungen 201 - 203 für das Pitchmodul 220, das Azimuthmodul 230 undloder das Rotorbremsmodul 240 auf. Das Pitchmodul 220 weist einen Anschluss 220a für die Anschlussleitung 201 und einen Anschluss 220b für ein Pitchkabel 221 auf, mittels welchem das Pitchmodul 220 mit mindestens einem der Pitchmotoren 150 gekoppelt werden kann. Das Azimuthmodul 230 weist einen ersten Anschluss 230a für eine Anschlussleitung 202 und einen zweiten Anschluss 230b für ein Azimuthkabel 231 auf, mittels welchem das Azimuthmodul 230 mit den Azimuthmotoren 140 gekoppelt werden kann. Das Rotorbremsmodul 240 weist einen ersten Anschluss 240a für eine Anschlussleitung 203 sowie einen zweiten Anschluss 240b für ein Bremskabel 241, mit welchem das Rotorbremsmodul 240 mit der Rotorbremse 130 gekoppelt werden kann, auf.

Das Versorgungsmodul 210 weist einen Eingangsanschluss 205a, an welchen eine Versorgungsleitung 205 angeschlossen werden kann, auf. Hierbei kann eine Stromversorgung 160 über die Versorgungsleitung 205 an den Anschluss 205a des Versorgungsmoduls 210 angeschlossen werden und damit das Versorgungsmodul 210 mit Energie versorgen. Optional kann eine Notbedieneinheit 209 vorgesehen sein, welche über eine Anschlussleitung 204 mit dem Versorgungsmodul gekoppelt sein kann. Das Versorgungsmodul kann optional eine Empfangseinheit 206 zum Empfangen der Befehle der Fernbedienung 250 aufweisen.

Optional kann das Versorgungsmodul 210 einen Rahmen und Räder bzw. Rollen aufweisen. Das Versorgungsmodul kann beispielsweise mittels einer Winde in die Gondel der Windenergieanlage befördert werden. Die mobile Steuereinheit kommt insbesondere dann zum Einsatz, wenn die Windenergieanlage nicht an das Energieversorgungsnetz angeschlossen bzw. elektrisch gekoppelt ist und somit keine Energie aus dem Energieversorgungsnetz beziehen kann. Dies ist beispielsweise bei der Montage, Instandsetzung, Wartung oder Demontage der Windenergieanlage der Fall. Die mobile Steuereinheit kommt damit nur zum Einsatz, wenn die Windenergieanlage nicht an das Energieversorgungsnetz angeschlossen ist. Sobald die Windenergieanlage an das Energieversorgungsnetz angeschlossen ist, kann die mobile Steuereinheit wieder aus der Gondel entfernt werden.

Das Pitchmodul 220 dient zur Steuerung des Pitchwinkels der Rotorblätter 108 der Windenergieanlage. Hierzu kann das Pitchmodul 220 insbesondere das Blattanschlusslager steuern. Das Pitchmodul 220 kann beispielsweise einen Steuerschrank mit einem Anschluss 220a für die Anschlussleitung 201, welche an das Versorgungsmodul 220 angeschlossen wird, und einen Anschluss 220b, an welchen das Pitchkabel 221 für die Pitchmotoren 150 angeschlossen wird, aufweisen. Das Pitchmodul 220 dient zum Umwandeln der Spannung vom Versorgungsmodul 210 in die für die Pitchmotoren 150 benötigte Spannung.

Das Steuern der Pitchmotoren 150 mittels des Pitchmoduls 220 kann somit beispielsweise mittels der Fernbedienung 250 oder alternativ mittels der Notbedieneinheit 209 erfolgen.

Damit erfolgt keine Steuerung bzw. Bedienung des Pitchmoduls 220 und vielmehr erfolgt die Bedienung über das Versorgungsmodul 210.

Das Azimuthmodul 230 weist einen ersten Anschluss 230a zum Anschließen über die Anschlussleitung 202 an das Versorgungsmodul 210 sowie einen weiteren Anschluss 230b zum Anschließen des Azimuthkabels 231 auf. Das Azimuthmodul 230 verteilt die Spannung vom Versorgungsmodul 210 z. B. über Schütze auf die Motoren und deren Bremsen.

Das Rotorbremsmodul 240 weist einen ersten Anschluss 240a zum Anschließen der Anschlussleitung 203 sowie einen zweiten Anschluss 240b zum Anschließen des Bremskabels 241 auf. In dem Rotorbremsmodul 240 wird die Spannung von dem Versorgungsmodul durch Bauteile auf Baugruppen der Bremse geschaltet, so dass diese die gerade benötigte Funktion ausführt (lösen oder arretieren).

Wie bei dem Pitchmodul 220 erfolgt keine direkte Steuerung des Azimuthmoduls 230 oder des Rotorbremsmoduls 240 durch den Bediener. Vielmehr erfolgt eine Steuerung durch das Versorgungsmodul 210 beispielsweise mittels der Fernbedienung 250 oder der Notbedieneinheit 209.

Gemäß der Erfindung stellt das Versorgungsmodul 210 eine Hauptsteuerungseinheit der mobilen Steuereinheit 200 dar. Gemäß der Erfindung werden die an das Versorgungsmodul 210 angeschlossenen Steuermodule 220 - 240 mittels der Fernbedienung 250 oder alternativ dazu mittels der Notbedieneinheit 209 gesteuert.

Gemäß einem Aspekt der vorliegenden Erfindung wird die mobile Steuereinheit gemäß der Erfindung dann eingesetzt, wenn beispielsweis Steuerschränke bzw. Steuereinheiten der Windenergieanlage (welche für den normalen Gebrauch ausgelegt sind) noch nicht angeschlossen sind oder wenn sie defekt sind und eine Wartung durchgeführt werden soll.

Mit der erfindungsgemäßen mobilen Steuereinheit wird eine mobile und modulare Steuereinheit vorgesehen. Je nach Bedarf können die benötigten Steuermodule (Pitchmodul, Azimuthmodul, Rotorbremsmodul) an das Versorgungsmodul angeschlossen werden.

Gemäß einem Aspekt der vorliegenden Erfindung werden die an das Versorgungsmodul 210 angeschlossenen Steuermodule 220 - 240 automatisch erkannt. Somit wird ein Plug and Play-System vorgesehen.

Gemäß der Erfindung werden die Steuermodule und damit die an die Steuermodule angeschlossenen Motoren über das Versorgungsmodul bzw. die Fernbedienung oder die Notbedieneinheit 209 gesteuert. Eine Steuerung der Steuermodule an den Steuermodulen selbst ist nicht mehr möglich. Die Steuerung des Versorgungsmoduls 210 kann über einen optionalen USB-Anschluss oder über eine optionale drahtlose Empfangseinheit aktualisiert bzw. geändert werden.

Durch die erfindungsgemäße mobile und modulare Steuereinheit kann die Anzahl der Steuerungsmodule, welche benötigt werden, um eine Vielzahl von Windenergieanlagen zu steuern, erheblich reduziert werden.

Die mobile Steuereinheit gemäß der Erfindung stellt ein Betriebsmittel zum Aufbau, zur Wartung und zur Demontage von Windenergieanlagen dar. Mittels der mobilen Steuereinheit können beispielsweise Pitchmotoren oder Azimuthmotoren verfahren werden undloder eine Rotorbremse kann gelöst oder arretiert werden. Die erfindungsgemäße mobile Steuereinheit stellt ein modulares System dar, welches für eine große Anzahl von Windenergieanlagen verwendet werden kann, wenn die Windenergieanlage nicht an das Versorgungsnetz angeschlossen ist.

Gemäß einem Aspekt der vorliegenden Erfindung kann das Versorgungsmodul der mobilen Steuereinheit eine Sicherheitstechnikeinheit beispielsweise für eine Not-Aus-Abschaltung aufweisen. Das Versorgungsmodul kann ferner als Stromverteiler verwendet werden, um die Steuermodule mit Energie zu versorgen.

Gemäß einem Aspekt der vorliegenden Erfindung kann in jedem der Steuermodule ein Parametersatz hinterlegt werden, mittels welchem die Steuerung der Pitchmotoren, der Azimuthmotoren oder der Rotorbremse erfolgen kann. Diese Parameter können für unterschiedliche Windenergieanlagen variieren.

Mittels der Funkfernbedienung kann die mobile Steuereinheit gesteuert werden. Dies ist vorteilhaft, weil damit beispielsweise die Pitchmotoren, die Azimuthmotoren oder die Rotorbremse ferngesteuert werden können. Erfindungsgemäß kann die mobile Steuereinheit durch Aktualisierung der Parametersätze in den Steuermodulen für unterschiedliche Windenergieanlagen verwendet werden, d. h. die mobile Steuereinheit kann universal einsetzbar sein. Optional kann das Versorgungsmodul neu eingesetzte bzw. mit dem Versorgungsmodul verbundene Steuereinheiten automatisch erkennen. Die erfindungsgemäße mobile Steuereinheit ist vorteilhaft, weil damit nicht mehr so viele unterschiedliche Steuermodule mitgeführt werden müssen. Ferner müssen weniger Ersatzteile auf Lager gelegt werden.

Gemäß einem Aspekt der vorliegenden Erfindung können die Pitchmotoren 150 als Gleichstrommotoren ausgestaltet sein. Das Pitchmodul 220 dient dann dazu, den Gleichstrom-Pitchmotor zu steuern. Insbesondere soll die Steuerung der Gleichstrommotoren so erfolgen, dass das maximale Drehmoment des Motors auch in einem warmen Zustand des Motors bestehen bleiben kann.

Das Pitchmodul 220 kann eine Spannung für die Feldwicklung sowie für die Ankerwicklung des Gleichstrommotors zur Verfügung stellen. Diese Spannungen sind Gleichspannungen zwischen 10 bis 500 Volt. Des Weiteren kann das Pitchmodul 220 eine Bremsspannung als Gleichspannung (10 bis 550 Volt) dem Gleichstrommotor zur Verfügung stellen.

Die Gleichstrommotoren 150 können optional ein Temperatursignal und ein Drehzahlsignal an das Pitchmodul 220 ausgeben. Dazu können die Gleichstrommotoren einen Temperatursensor und einen Drehgeber aufweisen. Das Pitchmodul 220 sieht eine Feldspannung für die Feldwicklung des Gleichstrommotors vor und versorgt die Feldspannung mit einem konstanten Strom, d. h. die Feldspannung wird so geregelt, dass ein konstanter Strom in der Feldwicklung vorgesehen werden kann. Wenn die Temperatur der Wicklung des Gleichstrommotors jedoch steigt, dann führt dies auch zu einer Erhöhung des elektrischen Widerstandes der Wicklung. Ein höherer elektrischer Widerstand führt wiederum zu einem geringeren Stromfluss und damit zu einer Abschwächung des Magnetfeldes der Feldwicklung. Dies wiederum hat zur Folge, dass das Drehmoment des Motors sinkt. Das Pitchmodul 220 kann einen Sollwert für den Strom in der Feldwicklung geliefert bekommen und kann die Feldspannung entsprechend regeln, damit die Feldwicklung eine optimale Magnetfeldstärke aufweist.

Die Ankerspannung an der Ankerwicklung kann ebenfalls durch das Pitchmodul 220 erfasst werden. Das Pitchmodul 220 kann die Drehzahl der Gleichstrommotoren steuern, indem die Ankerspannung reduziert oder erhöht wird. Des Weiteren kann die Drehrichtung des Motors durch das Pitchmodul 220 angepasst werden. Das Pitchmodul 220 kann die Spannung in der Feldwicklung und in der Ankerwicklung sowie die hierbei fließenden Ströme erfassen und zur Visualisierung aufbereiten. Die Bremsspannung, die Feldspannung und die Ankerspannung können überwacht und geregelt werden. Beispielsweise bei einer Leistungsunterbrechung kann die Spannungsversorgung reduziert oder abgeschaltet werden.

Zusätzlich dazu kann die Motorbremse aktiviert werden. Dadurch, dass die Feldspannung und Ankerspannung durch das Pitchmodul 220 überwacht werden, kann ein Defekt des Gleichstrommotors erfasst werden.

Das Pitchmodul 220 sieht eine Grenzspannung für die Bremse des Gleichstrommotors vor, welche unabhängig von der Feldspannung und der Ankerspannung gesteuert bzw. geregelt werden kann. Im Falle einer Leitungsunterbrechung kann die Bremse aktiviert werden. Das Pitchmodul 220 kann z. B. sieben getrennt ansteuerbare IGBT aufweisen, um die Feldspannung, die Bremsspannung und die Ankerspannung separat regeln zu können.

Durch die entsprechende Steuerung der Motoren 150 kann die Drehrichtung des Motors umgekehrt werden.

Durch die optionale Erfassung der Motortemperatur kann eine Überlastung oder Überhitzung des Motors verhindert werden.

Durch die optionale Erfassung der Drehzahl des Motors kann eine Überdrehzahl vermieden werden.

Mit dem erfindungsgemäßen Pitchmodul 200 kann eine drehzahlabhängige Steuerung der Gleichstrom-Pitchmotoren 150 erreicht werden. Insbesondere können die Gleichstrommotoren derart gesteuert werden, dass ein konstanter Strom in der Feldwicklung fließt.

## Patentansprüche

1. Verwenden einer mobilen Steuereinheit (200) zum Steuern von Komponenten einer Windenergieanlage, während die Windenergieanlage nicht an ein Energieversorgungsnetz angeschlossen ist, insbesondere bei einer Montage oder Demontage der Windenergieanlage oder während einer Wartung der Windenergieanlage und die Windenergieanlage keine Energie aus dem Energieversorgungsnetzwerk zur Steuerung der Komponenten der Windenergieanlage entnehmen kann,
wobei die Komponente der Windenergieanlage einen Pitchmotor (150), einen Azimutmotor (140) und eine Rotorbremse (130) darstellt,
wobei die mobile Steuereinheit (200) ein Versorgungsmodul (210) mit einer Hauptsteuereinheit (211) sowie ein erstes, zweites und drittes Steuermodul (220 - 240) jeweils zum Steuern des Pitchmotors (150), des Azimutmotors (140) und der Rotorbremse (150) aufweist, wobei das erste, zweite und dritte Steuermodul (220 - 240) mit dem Versorgungsmodul (210) gekoppelt sind und von dem Versorgungsmodul (210) mit Spannung sowie Steuerbefehlen versorgt werden,
wobei die mobile Steuereinheit (200) demontiert wird, wenn die Windenergieanlage wieder an das Energieversorgungsnetz angeschlossen ist, oder wenn die Wartung der Windenergieanlage beendet ist.

2. Verwenden einer mobilen Steuereinheit nach Anspruch 1, wobei die mobile Steuereinheit eine Bedieneinheit (209, 250) zum Steuern des mindestens einen Steuermoduls (220 - 240) zum Steuern einer Komponente der Windenergieanlage aufweist.

3. Verwenden einer mobilen Steuereinheit nach einem der Ansprüche 1 bis 2, wobei zwischen dem Versorgungsmodul (210) und dem ersten, zweiten und dritten Steuermodul (220 - 240) je eine Anschlussleitung (201 - 203) vorgesehen ist, mittels welcher die Spannung für die Steuermodule (220 - 240) sowie die Steuerbefehle übertragen werden können.

4. Verfahren zum Steuern einer Windenergieanlage, welche nicht an das Energieversorgungsnetz angeschlossen ist, insbesondere bei einer Montage oder Demontage der Windenergieanlage oder während einer Wartung der Windenergieanlage und die Windenergieanlage keine Energie aus dem Energieversorgungsnetzwerk zur Steuerung der Komponenten der Windenergieanlage entnehmen kann,
wobei die Komponente der Windenergieanlage einen Pitchmotor (150), einen Azimutmotor (140) und eine Rotorbremse (130) darstellt,
Positionieren einer mobilen Steuereinheit (200) mit einem ersten, zweiten und dritten Steuermodul (220-240) in einer Gondel der Windenergieanlage,
Positionieren und Anschließen des ersten, zweiten und dritten Steuermoduls (220) an das Versorgungsmodul (210) sowie jeweils den Pitchmotor (150), den Azimutmotor (140) und die Rotorbremse (130) der Windenergieanlage,
Steuern des Pitchmotors (150) mittels des ersten Steuermoduls (220), des Azimutmotors (140) mittels des zweiten Steuermoduls (230), und der Rotorbremse (130) mittels des dritten Steuermoduls (240) sowie mittels eines Bedienteils (209, 250), und
Demontieren der mobilen Steuereinheit (200) und des mindestens einen Steuermoduls (220), wenn die Windenergieanlage an das Energieversorgungsnetz angeschlossen ist, insbesondere wenn die Montage oder Demontage beendet ist, oder die Wartung beendet ist.

5. Mobile Steuereinheit (200) für eine Windenergieanlage, welche einen Pitchmotor (150), einen Azimutmotor (140) und eine Rotorbremse (130) aufweist, mit
einem Versorgungsmodul (210) mit einer Hauptsteuereinheit (211), und
einem mit dem Versorgungsmodul (210) gekoppelten ersten, zweiten und dritten Steuermodul (220 - 240) jeweils zum Steuern des Pitchmotors (150), des Azimutmotors (140) und der Rotorbremse (130), wobei das erste, zweite und dritte Steuermodul (220 - 240) jeweils Anschlüsse zum Anschluss an den Pitchmotor (150), den Azimutmotor (140) und die Rotorbremse (130) aufweist,
wobei die Hauptsteuereinheit (211) zum Steuern des Pitchmotors (150), des Azimutmotors (140) und der Rotorbremse (130), mittels der an das Versorgungsmodul (210) angeschlossenen ersten, zweiten und dritten Steuermodule (220 - 240) ausgestaltet ist,
wobei die mobile Steuereinheit (200) dazu ausgestaltet ist, gemäß einem der Ansprüche 1 bis 3 verwendet zu werden.

## Claims

1. Use of a mobile control unit (200) for controlling components of a wind turbine while the wind turbine is not connected to a power supply grid, in particular during the installation or dismantling of the wind turbine or during maintenance of the wind turbine and the wind turbine cannot take power from the power supply network for controlling the components of the wind turbine,
wherein the components of the wind turbine represent a pitch motor (150), a yawn motor (140) and a rotor brake (130),
wherein the mobile control unit (200) has a supply module (210) having a main control unit (211) and a first, second and third control module (220 - 240) each for controlling the pitch motor (150), the yawn motor (140) and the rotor brake (150), wherein the first, second and third control module (220 - 240) is coupled with the supply module (210) and receives voltage and control commands from the supply module (210),
wherein the mobile control unit (200) is removed when the wind turbine is connected to the power supply grid again or when the maintenance of the wind turbine has ended.

2. Use of a mobile control unit according to claim 1, wherein
the mobile control unit comprises an operating unit (209, 250) for controlling the at least one control module (220 - 240) for controlling a component of the wind turbine.

3. Use of a mobile control unit according to one of the claims 1 or 2, wherein
a connecting line (201 - 203) is arranged between the supply module (210) and each of the first, second and third control module (220 - 240) by means of which the voltage for the control modules (220 - 240) and the control commands can be transmitted.

4. Method of controlling a wind turbine, which is not connected to the power supply grid, in particular during an installation or dismantling of the wind turbine or during a maintenance of the wind turbine and the wind turbine cannot take power from the power supply grid for controlling the components of the wind turbine,
wherein the components of the wind turbine represent a pitch motor (150), a yawn motor (140) and a rotor brake (130),
positioning the mobile control unit (200) with a first, second and third control module (220 - 240) in a pod of the wind turbine,
positioning and connecting the first, second and third control module (220 - 240) to the supply module (210) as well as to the pitch motor (150), the yawn motor (140) and the rotor brake (130) of the wind turbine,
controlling the pitch motor (150) via the first control module (220), the azimuth motor (140) via the second control module (230) and the rotor brake (130) via the third control module (240) as well as with the operating unit (209, 250) and
removing the mobile control unit (200) and the at least one control module (220) when the wind turbine is connected to the power supply grid, in particular when the installing or dismantling has ended or the maintenance has ended.

5. A mobile control unit (200) for a wind turbine which comprises a pitch motor (150), a yawn motor (140) and a rotor brake (130), comprising
a supply module (210) with a main control unit (211) and
a first, second and third control module (220 - 240) coupled to the supply module (210) each for controlling the pitch motor (150), the yawn motor (140) and the rotor brake (130), wherein the first, second and third control module (220 - 240) each comprises connections for connecting the pitch motor (150), the yawn motor (140) and the rotor brake (130),
wherein the main control unit (211) is configured to control the pitch motor (150), the yawn motor (140) and the rotor brake (130) by means of the first, second and third control module (220 - 240) connected to the supply module (210),
wherein the mobile control unit (200) is configured to be used according to one of the claims 1 to 3.

## Revendications

1. Utilisation d'une unité de commande mobile (200) pour la commande de composants d'une éolienne, pendant que l'éolienne n'est pas raccordée à un réseau d'alimentation en énergie, en particulier lors d'un montage ou démontage de l'éolienne ou pendant une maintenance de l'éolienne et l'éolienne ne peut prélever de l'énergie du réseau d'alimentation en énergie pour la commande des composants de l'éolienne,
dans laquelle le composant de l'éolienne représente un moteur pas-à-pas (150), un moteur de gisement (140) et un frein de rotor (130),
dans laquelle l'unité de commande mobile (200) présente un module d'alimentation (210) avec une unité de commande principale (211) ainsi qu'un premier, deuxième et troisième module de commande (220-240) respectivement pour la commande du moteur pas-à-pas (150), du moteur de gisement (140) et du frein de rotor (150), dans laquelle les premier, deuxième et troisième modules de commande (220-240) sont accouplés au module d'alimentation (210) et sont alimentés en tension ainsi qu'en instructions de commande par le module d'alimentation (210),
dans laquelle l'unité de commande mobile (200) est démontée lorsque l'éolienne est à nouveau raccordée au réseau d'alimentation en énergie, ou lorsque la maintenance de l'éolienne est terminée.

2. Utilisation d'une unité de commande mobile selon la revendication 1, dans laquelle l'unité de commande mobile présente une unité de commande utilisateur (209, 250) pour la commande du au moins un module de commande (220-240) pour la commande d'un composant de l'éolienne.

3. Utilisation d'une unité de commande mobile selon l'une quelconque des revendications 1 à 2, dans laquelle respectivement une ligne de raccordement (201-203) est prévue entre le module d'alimentation (210) et le premier, deuxième et troisième module de commande (220-240), au moyen de laquelle la tension pour les modules de commande (220-240) ainsi que les instructions de commande peuvent être transmises.

4. Procédé pour la commande d'une éolienne, laquelle n'est pas raccordée au réseau d'alimentation en énergie, en particulier lors d'un montage ou démontage de l'éolienne ou pendant une maintenance de l'éolienne et l'éolienne ne peut prélever d'énergie du réseau d'alimentation en énergie pour la commande des composants de l'éolienne,
dans lequel le composant de l'éolienne représente un moteur pas-à-pas (150), un moteur de gisement (140) et un frein de rotor (130),
positionnement d'une unité de commande mobile (200) avec un premier, deuxième et troisième module de commande (220-240) dans une nacelle de l'éolienne,
positionnement et raccordement du premier, deuxième et troisième module de commande (220) au module d'alimentation (210) ainsi que respectivement au moteur pas-à-pas (150), au moteur de gisement (140) et au frein de rotor (130) de l'éolienne,
commande du moteur pas-à-pas (150) au moyen du premier module de commande (220), du moteur de gisement (140) au moyen du deuxième module de commande (230), et du frein de rotor (130) au moyen du troisième module de commande (240) ainsi qu'au moyen d'une partie de commande utilisateur (209, 250), et
démontage de l'unité de commande mobile (200) et du au moins un module de commande (220), lorsque l'éolienne est raccordée au réseau d'alimentation en énergie, en particulier lorsque le montage ou démontage est terminé, ou la maintenance est terminée.

5. Unité de commande mobile (200) pour une éolienne, laquelle présente un moteur pas-à-pas (150), un moteur de gisement (140) et un frein de rotor (130), avec
un module d'alimentation (210) avec une unité de commande principale (211), et
un premier, deuxième et troisième module de commande (220-240) couplé au module d'alimentation (210) respectivement pour la commande du moteur pas-à-pas (150), du moteur de gisement (140) et du frein de rotor (130), dans laquelle le premier, deuxième et troisième module de commande (220-240) présente respectivement des raccordements pour le raccordement au moteur pas-à-pas (150), au moteur de gisement (140) et au frein de rotor (130),
dans laquelle l'unité de commande principale (211) est conçue pour la commande du moteur pas-à-pas (150), du moteur de gisement (140) et du frein de rotor (130), au moyen des premier, deuxième et troisième modules de commande (220-240) raccordés au module d'alimentation (210),
dans laquelle l'unité de commande mobile (200) est conçue pour être utilisée selon l'une quelconque des revendications 1 à 3.
